# EUROPEAN PATENT SPECIFICATION

(11) **EP 2 594 907 B1**
(45) Date of publication and mention of the grant of the patent: **11.08.2021**
(21) Application number: 11189900.1
(22) Date of filing: 21.11.2011
(51) Int. Cl.: G01F 1/66, G01F 15/00, G01F 15/14

(54) **Flow meter with reinforced polymer house**
Durchflussmesser mit verstärktem Polymergehäuse
Débitmètre avec boîtier en polymère renforcé

(43) Date of publication of application: 22.05.2013
(73) Proprietor: Kamstrup A/S, 8660 Skanderborg (DK)
(72) Inventor: Laursen, Peter Schmidt, 8660 Skanderborg (DK); Sørensen, Jens Lykke, 8330 Beder (DK); Nielsen, Søren Tønnes, 8355 Solbjerg (DK)
(74) Representative: Plougmann Vingtoft a/s

(56) References cited:
- EP-A1- 1 967 827
- EP-A1- 2 141 463
- WO-A1-2011/127934
- WO-A2-2011/072693
- DE-A1- 4 443 415
- DE-A1-102007 011 547
- US-A1- 2003 075 827

## Description

### FIELD OF THE INVENTION

The invention relates to the field of ultrasonic flow meters. More specifically, the invention relates to an ultrasonic flow meter with a polymer house.

### BACKGROUND OF THE INVENTION

An ultrasonic flow meter forming part of a consumption meter for measuring a consumed amount of water, heat or cooling is normally mounted in a water pipe system. In such water pipe system the flow meter can be exposed to rather high peak fluid pressure forces known as "water hammering". The water hammering on the flow meter can as large as 100 bar. In a design where an ultrasonic piezo-electric transducer front absorbs the water hammering, a pressure build up of 100 kg over the area of the transducer front (100 bar over an area of 25 mm²) can be seen.

This means that if the transducer is housed in a separate polymer house mounted on a pressure carrying flow tube, there is a high risk that the polymer house will break and thus cause permanent damage of the flow meter. Solutions to this problem in the prior art are to provide a monolithic polymeric unit of flow tube and housing, or to mount transducer capsules in the flow tube in a manner where they can withstand the water hammering, see for example WO 2011/072693 and EP 2 141 463. WO2011/127934 discloses an ultrasonic flow meter according to the preamble of claim 1.

### SUMMARY OF THE INVENTION

It is an object of the present invention to provide an ultrasonic flow meter with a separate polymer house capable of withstanding normally occurring water hammering without the risk of breaking.

In a first aspect, the invention provides an ultrasonic flow meter according to claim 1.

Such an ultrasonic flow meter is advantageous, since it provides a flow meter where transducers and control electronics can be provided in a separate enclosure to be mounted on the flow tube. By use of a monolithic polymeric house with only a single opening that can be sealed with a single sealing member, the cavity when closed, provides a high protection to water intrusion, i.e. it is water tight to a very high degree, but which is nevertheless simple to assemble and has a minimal amount of potential leak areas. Due to the mounting element, the house is made robust to water hammering, and the remaining part of the house can be provided with the aim to ensure a sufficient robustness of the house wall, a sufficiently low degree of water penetration, and other aspects without considering the water hammering aspect.

The mounting element arranged to assist the polymer house in absorbing water hammering forces can in embodiments be provided as a separate element or as an element cast as a part of the house. In both situations, the provision of the mounting element can be integrated in the manufacturing process with no or only a few additional manufacturing steps.

In an important embodiment, the elastic modulus of the mounting element is higher than the elastic modulus of the polymer monolithic house element, preferably such as a factor of 2, 5, 10, 25 or even 50 or more.

In embodiments, the ultrasonic flow meter may be or may be part of a charging consumption meter, e.g. a water meter, gas meter, heat meter, or cooling meter, where the consumption meter is arranged for measuring consumption data of a supplied utility used as a basis for billing. The consumption meter may be used in connection with district heating or district cooling. The consumption meter may be a legal meter, i.e. a meter which is subdued to regulatory demands. Such regulatory demands may be demands to the precision of the measurements.

A second aspect of the invention provides a method of manufacturing an ultrasonic flow meter according to claim 14.

Preferably, the method comprises an intermediate step of mounting ultrasonic transducers and measurement circuit in the cavity of the house is performed prior to sealing the single opening in the house with sealing means. Hereby, the sub-assembly house component is a functioning component that can be tested separately prior to mounting on the flow tube.

It is appreciated that the same advantages and embodiments described for the first aspect apply as well for the second aspect. Further, it is appreciated that the described embodiments can be intermixed in any way between the two aspects.

### BRIEF DESCRIPTION OF THE FIGURES

The invention will now be described in more detail with regard to the accompanying figures of which
Fig. 1 illustrates a sectional view of an embodiment with a plane mounting element,
Fig. 2 illustrates a house seen from the bottom with a mounting element in the form of two bars,
Fig. 3 illustrates a house seen from the bottom with a mounting element in the form of a plane member with openings aligned with transducer areas of the house,
Fig. 4 illustrates an exploded view of a house with a plane mounting element with holes arranged for engagement with protrusions on the bottom of the house,
Figs. 5 and 6 illustrate the embodiment of Fig. 4 in an assembled state, in two different views,
Fig. 7 illustrates an exploded lower view of a house with a plane mounting element attached to its bottom, and a flow tube on which the house is to be mounted,
Fig. 8 illustrates the embodiment of Fig. 7 in an assembled state in an upper view,
Fig. 9 illustrates an exploded upper view of an embodiment with a house with through-going tracks for receiving two bar shaped mounting elements, and
Fig. 10 illustrates a flow meter house with the mounting element formed as an integral part of the bottom of the house.

The figures illustrate specific ways of implementing the present invention and are not to be construed as being limiting to other possible embodiments falling within the scope of the attached claim set.

### DESCRIPTION OF EMBODIMENTS

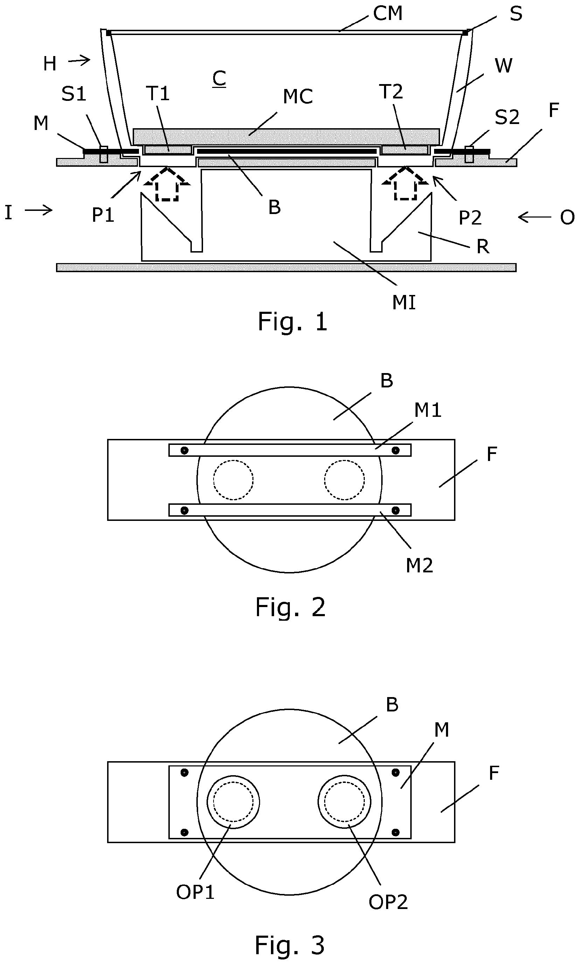

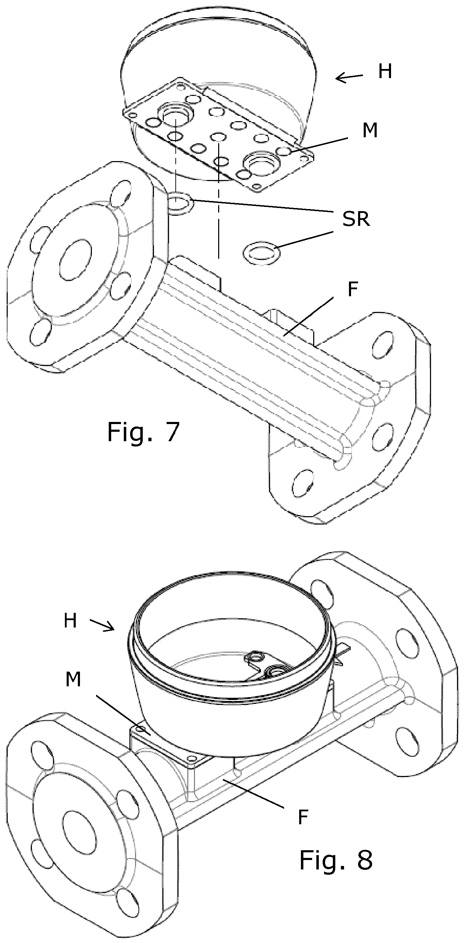

Fig. 1 illustrates a side section view of an ultrasonic flow meter with a separate house H formed by a cup shaped monolithic polymer element with a sidewall W and a generally plane bottom B with protrusions aligned with positions of ultrasonic transducers T1, T2. The sidewall W and bottom B are shaped so as to form a cavity C in which the ultrasonic transducers T1, T2 and measuring circuits MC are positioned. The protrusions on the bottom B of the house H are arranged in respective holes P1, P2 in a pressure carrying flow tube F, e.g. formed of metal. This allows ultrasonic signals to pass through the wall of the polymer protrusions of the bottom B and into a fluid, such as water, flowing in the through-going opening between inlet I and outlet O of the flow tube F. The flow tube comprises two openings P1, P2 and the outer surface of the house wall at the area of the transducers are directly exposed to the fluid flow. The gap between the house and the openings P1, P2 of the flow tube F can be sealed by means of a sealing member, e.g. an O-ring (not shown in Fig. 1, but shown as SR on Fig. 7). Due to the direct exposure of the house bottom in direct contact with the fluid, any water hammering will act at these areas. The forces that arise from a fluid pressure in connection with water hammering are indicated by the wide dashed arrows. To ensure that the house will not break from a large fluid pressure transient, the bottom of the house is reinforced by the presence of the mounting element M.

An important feature of the present invention is the ability to provide an enclosure for the electronic components, which is sufficiently water tight to resist damaging humidity intrusion from the surrounding ambient. To ensure a sufficient watertight meter house, a sealing ring S between the house wall and the cover member CM is used to seal the cavity.

In an embodiment, the house H is shaped to provide the cavity C with sufficient space to house both the ultrasonic transducers T1, T2 and necessary measurement circuit and e.g. radio transmission module for wireless reading, display, etc., and still the house H has one single opening which can be sealed by means of a single sealing element and a single cover member.

In the illustrated embodiment of Fig. 1, the ultrasonic measurements of flow rate is performed by a measurement unit comprising measurement circuit MC in the form of a Printed Circuit Board (PCB) with circular shaped piezo-electric transducers T1, T2 mounted thereon. In general, the transducers T1, T2 may be electrically connected to the PCB by other means, such as wires, and thus the transducers T1, T2 may be positioned away from the PCB. The measurement circuit MC serves to control the transducers T1, T2 so as to allow measurement of a flow rate of the fluid flowing through the flow tube F. The transducers T1, T2 are preferably placed in the same plane in a manner so that the centre axis of the flow tube F, the plane of the mounting area, the transducers T1, T2, and the plane of the PCB of the measurement circuit MC are all parallel.

A set of reflectors R are shown in the flow tube aligned with the transducers T1, T2, and these reflectors serve to reflect ultrasonic signals so as to allow ultrasonic signals to travel between the transducers T1, T2 through a measurement distance in the fluid flow. The reflectors form part of a measuring insert MI also including an intermediate measurement tube forming the measurement distance between the two reflectors. The measuring insert MI is preferably arranged to be inserted into and fixed to the flow tube F.

The ultrasonic flow meter is a transit time flow meter arranged to measure a flow rate of a fluid flowing in the flow tube F by use of the known operation principle for transit time flow meters, where ultrasonic signals are emitted at one transducer and received at the other transducer, and where the difference in time-of-arrival between oppositely propagating signals is measured and converted into a flow rate. Further signal processing required to calculate the flow rate or parameters derived from the flow rate may be part of the measurement circuit MC, or may be part of a separate calculator circuit (not shown) communicatively connected to the flow meter, placed inside or outside the cavity C.

A mounting element M in the form of a rather thin, e.g. 1-2 mm thick, monolithic element of steel or reinforced polymer plate is arranged below the bottom B of the house H. The mounting element M may be attached to the bottom of the house H with various means, e.g. by glue, ultrasonic welding, rivets or by means of one or more spatially distributed screws to as to allow a large area of the bottom B to be attached to the mounting element M in order to ensure that the bottom B and the mounting element M serve to effectively engage in order to cooperate in absorbing water hammering forces from the fluid flow. Alternatively, the mounting element M may be inserted into a slot formed in the bottom B of the house H. Hereby, the rather vulnerable polymer house H is significantly reinforced such that damage to the house H due to water hammering can be avoided. The mounting element M and bottom B of the house H can alternatively be attached to each other by means of glue, or by means of ultrasound welding. Further alternatives for attachment of the mounting element M and bottom B of the house H to ensure mutual engagement are described in the following.

According to the invention, the mounting element M has two or more holes arranged for attaching the mounting element M to the flow tube F by means of screws S1, S2. As seen, the mounting element M is shown to protrude outside the boundary of the house H, thus allowing space for holes, preferably at least one on each side of the house H, so as to fasten the mounting element M to the flow tube F, and thereby also attaching the house H to the flow tube F. Other means for fastening mounting element M and house H to the flow tube F, such as using a bracing element, clips or clamping, are not part of the invention. Screws or other fastening means cannot be placed inside the cavity, since they would penetrate the bottom of the cavity which would provide channels for humidity to enter into the cavity.

The house element is made in a polymeric material. Suitable materials may be selected from, but is not limited to, the group consisting of polyphenylene sulphide (PPS), polyether sulphone (PES) and Polyether Sulphone (PSU). It is noted that the properties of the polymeric materials can be customized by adding certain additives prior to the moulding process, affecting the material properties such as stiffness, density or the acoustic impedance. Examples of potential additives include reinforcement materials such as glass fibres, density increasing fillers such as chalk (calcium carbonate, CaCO3) or powdery stainless steel raising the acoustic impedance of the material.

Fig. 2 shows a sketch of an embodiment serving to illustrate relation between bottom B of a polymer house, a flow tube F with two openings (dashed circles) for ultrasonic signals to penetrate, and one way of forming a mounting element, namely as two separate monolithic elements M1, M2, e.g. made of steel. These elements M1, M2 may be bars, and to engage with the house bottom B for supporting the house against water hammering, the two elements M1, M2 are arranged on opposite sides of the openings in the flow tube F. In each end of the elements M1, M2 the black circles indicate holes for attachment to the flow tube by means of screws.

In general, the mounting element can be formed by more than two separate elements, e.g. three or four separate monolithic bar shaped or plate shaped elements, in case another spatially distributed coupling between mounting element and house bottom is desired.

Fig. 3 shows a similar view as Fig. 2, however with a mounting element constituted by a single monolithic element M, e.g. a plane steel plate. The plate M has circular openings OP1, OP2 aligned with the openings (dashed circles) and slightly larger in diameter. The plate structure of the mounting element M serves to provide a large area common with the house bottom B, and thus an effective engagement with the house structure can be obtained using one of the mentioned fastening means. As also shown in Fig. 1, the mounting element M protrudes from the house H boundary, and the mounting element M has through-going holes, here shown as two in each end of the mounting element M, to allow fastening by means of screws to the flow tube F.

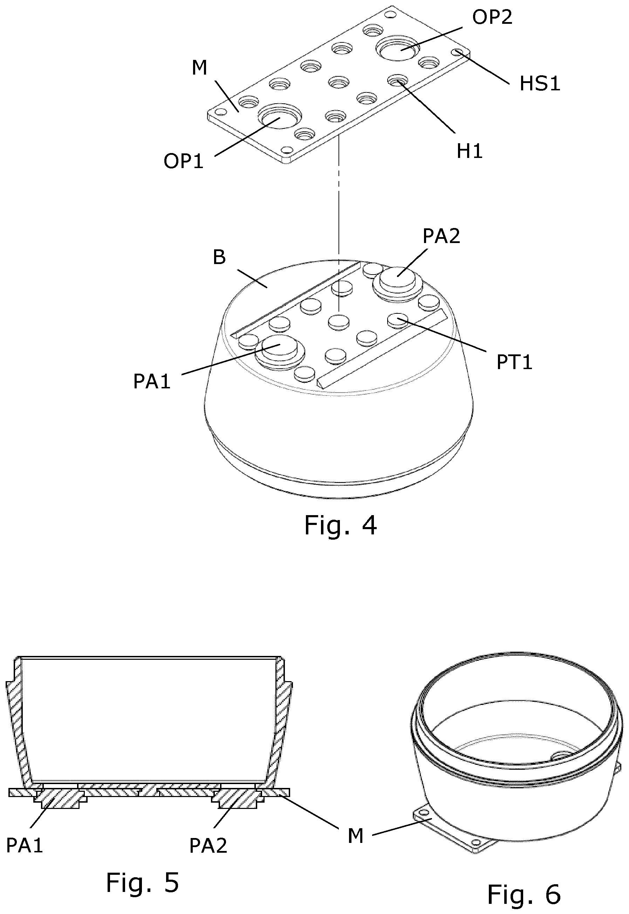

Fig. 4 shows an exploded view of a polymer house with a bottom B, and a plate shaped monolithic mounting element M with circular openings OP1, OP2 arranged to match transducer protrusions PA1, PA2 on the house bottom B. Further, to efficiently engage the mounting element M and house bottom B, a plurality of spatially distributed circular protrusions PT1 are provided and arranged for engagement with corresponding openings H1 of the mounting element M. This arrangement is suited for casting the house and mounting element M together, e.g. in the process of casting the house, however it may be preferred to first cast the house, and subsequently cast the mounting element M onto the house. The mounting element can be such as a steel plate or a reinforced polymer plate. Further, the mounting element M has four holes HS1, two in each end, and these holes HS1 serve to fasten the mounting element M, and thus also the house, to a flow tube by means of screws, as also shown in Fig. 1.

In Fig. 4, the openings H1, OP1, OP2 of the mounting element M are not simple circular holes, but these openings H1, OP1, OP2 have varying diameter across the thickness of the plate. Hereby, a tight structural coupling between the house bottom B and the mounting element M can be obtained when cast together as mentioned, since the protrusions PA1, PA2, PT1 are shaped to match the mentioned varying diameter. In another embodiment, the protrusions PA1, PA2, PT1 may be initially cast formed with one diameter in their entire extension so as to allow penetration through the openings H1, OP1, OP2, and then subsequently, the protrusions PA1, PA2, PT1 can be melted into their final shape and thereby serving to effectively lock the mounting element to the house bottom B.

Fig. 5 and 6 show different views of the embodiment of Fig. 4 with the mounting element attached to the house. Fig. 5 shows a sectional view, whereas Fig. 6 shows a 3D view of the cup shaped house.

Fig. 7 shows an exploded view of the same house H and mounting element M embodiment as shown in Figs. 4-6, but illustrated together with a matching flow tube F, possibly formed of metal. Inlet and outlet in the ends of the flow tube F have flanges arranged for mounting the flow tube F to a pipe system. Sealing rings SR serve to seal the gap between transducer protrusions and the matching openings in the flow tube F. The flow tube may in embodiments be made of a metal or a metal alloy such as brass, red brass, stainless steel, or other suitable casting alloys, as well as of a suitable polymer material.

Fig. 8 shows another view of the embodiment of Fig. 7 but in an assembled state. The flow tube F has portions arranged for receiving the house H and mounting element M assembly so as to allow fastening of this assembly to the flow tube F by means of screws through the holes in the protruding part of the mounting element M.

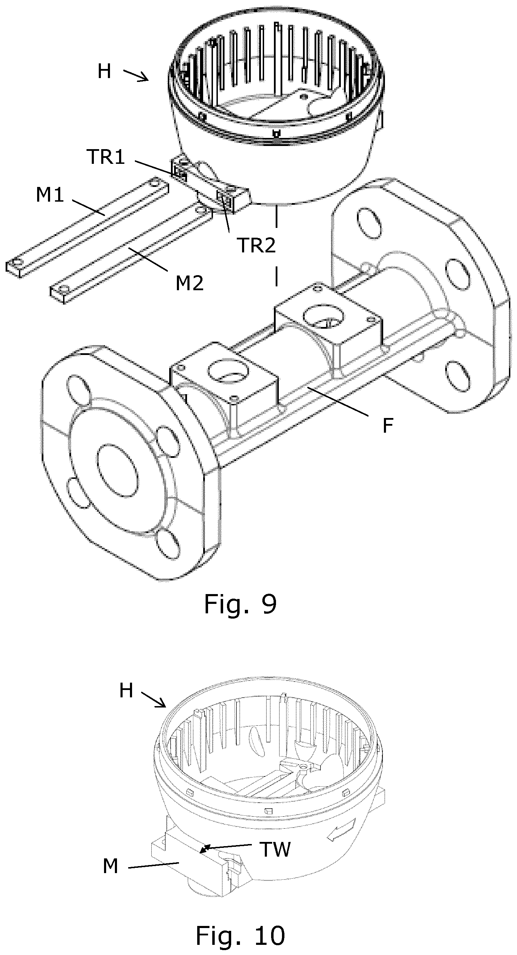

Fig. 9 illustrates one way of engaging the two bar shaped mounting elements M1, M2 shown in Fig. 2 with the structure of the house H. As seen, the house H has in its bottom part a through-going passage, here shown as two separate tracks TR1, TR2 shaped to fit the shape of the respective mounting element bars M1, M2, such that the bares can enter tracks, and preferably the mounting element bars M1, M2 are longer than the tracks, such that the ends of the mounting element bars M1, M2 can protrude from the house H. Inside the tracks TR1, TR2, the mounting element bars M1, M2 can be attached to the house structure in various ways as already mentioned. The house H and mounting elements M1, M2 are fastened to the flow tube F with screws though holes in the protruding ends of the mounting element bars M1, M2.

Fig. 10 illustrates a further embodiment of a flow meter house H. In the illustrated embodiment, the mounting element is provided as an integral part of the bottom of the house, cast monolithically with the house. The bottom part is in the area to be positioned on the flow tube, reinforced by providing a thicker wall TW. In the illustrated embodiment the mounting element is provided by a massive wall thickness along a part of the bottom periphery, however the bottom part may also be reinforced by one or more ribs formed integrally with the mounting element. That is, instead of a massive wall thickness, part of the material may be been removed to form ribs.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different dependent claims, may possibly be advantageously combined, and the mentioning of these features in different dependent claims does not exclude that a combination of features is not possible and advantageous.

## Claims

1. An ultrasonic flow meter arranged to measure a flow rate of a fluid, the flow meter comprising:
- a flow tube (F) with a through-going flow passage for passage of a fluid between an inlet (I) and an outlet (O), and two through-going openings (P1, P2) arranged in a wall of the flow tube (F), each one for providing an opening into the flow passage;
- a house (H) separate from the flow tube, formed by a monolithic polymer house element having a bottom part (B) and a side part (W) to form a cavity (C) with a single opening, wherein the bottom part (B) has two areas arranged for transmission of ultrasonic signals, said areas provided with protrusions (PA1, PA2) arranged to enter the two through-going openings (P1, P2) in the wall of the flow tube (F), and wherein the house (H) is arranged for being mounted on the flow tube (F) so that the protrusions are arranged in the openings (P1, P2) into the flow passage;
- two or more ultrasonic transducers (T1, T2) arranged in the cavity (C) aligned with said protrusions (PA1, PA2) and arranged for emission and receipt of ultrasonic signals through the areas of the bottom part (B) of the house (H); and
- a mounting element (M) protruding from the house (H) boundary, said mounting element (M) being arranged to reinforce the bottom part of the house, the mounting element being arranged in mutual engagement with the bottom part of the house, and where the bottom part (B) of the house (H) and the mounting element collectively absorb forces from a fluid pressure in the flow tube when the house is mounted on the flow tube,
**characterized in** the mounting element (M) being plane and having through-going holes (HS1) to allow fastening by means of screws to the flow tube (F).

2. Ultrasonic flow meter according to claim 1, wherein the mounting element (M) has an elastic modulus which is higher than the elastic modulus of the polymer monolithic house element.

3. Ultrasonic flow meter according to any of the preceding claims, wherein the mounting element (M) is a separate element, cast into the bottom part (B) of the monolithic house element.

4. Ultrasonic flow meter according to any of the preceding claims, wherein the mounting element (M) is made of a metal or a composite material.

5. Ultrasonic flow meter according to any of the preceding claims, wherein the mounting element is constituted by a single monolithic element (M).

6. Ultrasonic flow meter according to claim 5 wherein the house bottom (B) has a plurality of spatially distributed circular protrusions (PT1) for engagement with corresponding openings (H1) of the mounting element (M).

7. Ultrasonic flow meter according to any of claims 1-4, wherein the mounting element comprises two or more monolithic elements (M1, M2).

8. Ultrasonic flow meter according to any of the preceding claims, wherein the one or more areas of the bottom part (B) arranged for transmission of ultrasonic signals has at least one protrusion (PA1, PA2) arranged to enter the at least one through-going opening (P1, P2) in the wall of the flow tube (F).

9. Ultrasonic flow meter according to any of the preceding claims, wherein the bottom part (B) comprises one or more tracks (TR1, TR2) arranged to engage with the mounting element (M1, M2).

10. Ultrasonic flow meter according to any of the preceding claims, wherein mounting element (M) is fastened to the bottom part of the monolithic house element by means of at least one of: screws (S1, S2), glue, rivets and one or more ultrasound weldings.

11. Ultrasonic flow meter according to any of the claims 1, 2 or 8, wherein the mounting element is an integral part of the bottom of the house, cast monolithically with the house.

12. Ultrasonic flow meter according to claim 11, wherein the bottom part is reinforced by having a thicker wall thickness of the mounting element, than of the side part.

13. Ultrasonic flow meter according to any of the preceding claims, wherein the monolithic house element is shaped so as to allow space in the cavity (C) for the two or more ultrasonic transducers (T1, T2) and an associated measurement circuit (MC).

14. Method of manufacturing an ultrasonic flow meter, the method comprising
- providing a polymer monolithic house element (H) having a bottom part and a side part to form a cavity with a single opening, and wherein the bottom part has two areas arranged for transmission of ultrasonic signals,
- providing a mounting element (M) formed by a material having an elastic modulus which is higher than the elastic modulus of the polymer monolithic house element,
- attaching the mounting element (M) to the bottom part of the house element to form a sub-assembly house so that the bottom part of the house element and the mounting element are arranged to collectively absorb forces from a fluid pressure,
- fastening the sub-assembly house to a flow tube with a through-going flow passage for passage of a fluid between an inlet and an outlet, and two through-going openings arranged in a wall of the flow tube, each one for providing an opening into the flow passage,
- where the mounting element (M) is plane and protrudes from the house (H) boundary and has through-going holes (HS1) for fastening by means of screws (S1, S2) to the flow tube (F).

15. Method according to claim 14, comprising mounting ultrasonic transducers and measurement circuit in the cavity of the house element prior to sealing the single opening in the house with sealing means.

## Patentansprüche

1. Ultraschall-Durchflussmesser, der dazu angeordnet ist, eine Durchflussrate eines Fluids zu messen, wobei der Durchflussmesser Folgendes umfasst:
- ein Durchflussrohr (F) mit einem durchgehenden Durchflusskanal zum Durchgang eines Fluids zwischen einem Einlass (I) und einem Auslass (O), und zwei durchgehenden Öffnungen (P1, P2), die in einer Wand des Durchflussrohres (F) angeordnet sind, die jeweils eine Öffnung zu dem Durchflusskanal bereitstellen;
- ein Gehäuse (H), das von dem Durchflussrohr getrennt ist, gebildet durch ein monolithisches Polymer-Gehäuseelement mit einem unteren Teil (B) und einem Seitenteil (W), um einen Hohlraum (C) mit einer einzelnen Öffnung zu bilden, wobei der untere Teil (B) zwei Bereiche aufweist, die zur Übertragung von Ultraschallsignalen angeordnet sind, wobei die Bereiche über Vorsprünge (PA1, PA2) verfügen, die dazu angeordnet sind, in die zwei durchgehenden Öffnungen (P1, P2) in der Wand des Durchflussrohres (F) einzudringen, und wobei das Gehäuse (H) dazu angeordnet ist, so an dem Durchflussrohr (F) montiert zu werden, dass die Vorsprünge in den Öffnungen (P1, P2) in den Durchflusskanal angeordnet sind;
- zwei oder mehr Ultraschallwandler (T1, T2), die in dem Hohlraum (C) angeordnet sind, die mit dem Vorsprüngen (PA1, PA2) ausgerichtet sind und zur Ausstrahlung und zum Empfang von Ultraschallsignalen durch die Bereiche des unteren Teils (B) des Gehäuses (H) angeordnet sind; und
- ein Montageelement (M), das von der Umrandung des Gehäuses (H) hervorsteht, wobei das Montageelement (M) dazu angeordnet ist, den unteren Teil des Gehäuses zu verstärken, wobei das Montageelement mit dem unteren Teil des Gehäuses in gegenseitigem Eingriff angeordnet ist, und wobei der untere Teil (B) des Gehäuses (H) und das Montageelement gemeinsam Kräfte von einem Fluiddruck in dem Durchflussrohr absorbieren, wenn das Gehäuse an dem Durchflussrohr montiert ist, **dadurch gekennzeichnet, dass**
- das Montageelement (M) eben ist und durchgehende Löcher (HS1) aufweist, um mittels Schrauben ein Befestigen an dem Durchflussrohr (F) zu ermöglichen.

2. Ultraschall-Durchflussmesser nach Anspruch 1, wobei das Montageelement (M) einen E-Modul aufweist, der höher als der E-Modul des monolithischen Polymer-Gehäuseelements ist.

3. Ultraschall-Durchflussmesser nach einem der vorhergehenden Ansprüche, wobei das Montageelement (M) ein separates Element ist, das in den unteren Teil (B) des monolithischen Gehäuseelements gegossen ist.

4. Ultraschall-Durchflussmesser nach einem der vorhergehenden Ansprüche, wobei das Montageelement (M) aus einem Metall oder einem Verbundmaterial hergestellt ist.

5. Ultraschall-Durchflussmesser nach einem der vorhergehenden Ansprüche, wobei das Montageelement durch ein einzelnes monolithisches Element (M) gebildet ist.

6. Ultraschall-Durchflussmesser nach Anspruch 5, wobei das Gehäuseboden (B) eine Vielzahl von räumlich verteilten kreisförmigen Vorsprüngen (PT1) zum Eingreifen in entsprechende Öffnungen (H1) des Montageelements (M) aufweist.

7. Ultraschall-Durchflussmesser nach einem der Ansprüche 1-4, wobei das Montageelement zwei oder mehr monolithische Elemente (M1, M2) umfasst.

8. Ultraschall-Durchflussmesser nach einem der vorhergehenden Ansprüche, wobei der eine oder die mehreren Bereiche des unteren Teils (B), die zur Übertragung von Ultraschallsignalen angeordnet sind, zumindest einen Vorsprung (PA1, PA2) aufweisen, der dazu angeordnet ist, in die zumindest eine durchgehende Öffnung (P1, P2) in der Wand des Durchflussrohres (F) einzudringen.

9. Ultraschall-Durchflussmesser nach einem der vorhergehenden Ansprüche, wobei der untere Teil (B) eine oder mehrere Schienen (TR1, TR2) umfasst, die dazu angeordnet sind, in das Montageelement (M1, M2) einzugreifen.

10. Ultraschall-Durchflussmesser nach einem der vorhergehenden Ansprüche, wobei das Montageelement (M) an dem unteren Teil des monolithischen Gehäuseelements mittels zumindest eines der Folgenden befestigt ist: Schrauben (S1, S2), Klebstoff, Nieten und eine oder mehrere Ultraschallschweißungen.

11. Ultraschall-Durchflussmesser nach einem der Ansprüche 1, 2 oder 8, wobei das Montageelement ein integraler Bestandteil des Bodens des Gehäuses ist und monolithisch mit dem Gehäuse gegossen ist.

12. Ultraschall-Durchflussmesser nach Anspruch 11, wobei der untere Teil dadurch verstärkt ist, dass er eine dickere Wandstärke des Montageelements als die des Seitenteils aufweist.

13. Ultraschall-Durchflussmesser nach einem der vorhergehenden Ansprüche, wobei das monolithische Gehäuseelement so geformt ist, dass es in dem Hohlraum (C) Platz für die zwei oder mehr Ultraschallwandler (T1, T2) und eine zugehörige Messschaltung (MC) bietet.

14. Verfahren zum Herstellen eines Ultraschall-Durchflussmessers, wobei das Verfahren Folgendes umfasst:
- Bereitstellen eines monolithischen Polymer-Gehäuseelements (H) mit einem unteren Teil und einem Seitenteil, um einen Hohlraum mit einer einzelnen Öffnung zu bilden, und wobei der untere Teil zwei Bereiche aufweist, die zur Übertragung von Ultraschallsignalen angeordnet sind,
- Bereitstellen eines Montageelements (M), das durch ein Material gebildet ist, das einen E-Modul aufweist, der höher als der E-Modul des monolithischen Polymer-Gehäuseelements ist,
- Anbringen des Montageelements (M) an dem unteren Teil des Gehäuseelements, um eine Gehäuseunterbaugruppe zu bilden, sodass der untere Teil des Gehäuseelements und das Montageelement dazu angeordnet sind, Kräfte von einem Fluiddruck gemeinsam zu absorbieren,
- Befestigen der Gehäuseunterbaugruppe an einem Durchflussrohr mit einem durchgehenden Durchflusskanal zum Durchgang eines Fluids zwischen einem Einlass und einem Auslass, und zwei durchgehenden Öffnungen, die in einer Wand des Durchflussrohres angeordnet sind, die jeweils eine Öffnung zu dem Durchflusskanal bereitstellen,
- wobei das Montageelement (M) eben ist und aus der Umrandung des Gehäuses (H) hervorsteht und durchgehende Löcher (HS1) zum Befestigen an dem Durchflussrohr (F) mittels Schrauben (S1, S2) aufweist.

15. Verfahren nach Anspruch 14, umfassend ein Montieren von Ultraschallwandlern und einer Messschaltung in dem Hohlraum des Gehäuseelements vor dem Abdichten der einzelnen Öffnung in dem Gehäuse mittels Abdichtmitteln.

## Revendications

1. Débitmètre à ultrasons agencée pour mesurer un débit d'un fluide, le débitmètre comprenant :
- un tube d'écoulement (F) avec un passage d'écoulement traversant pour le passage d'un fluide entre une entrée (I) et une sortie (O), et deux ouvertures traversantes (P1, P2) agencées dans une paroi du tube d'écoulement (F) chacune pour fournir une ouverture dans le passage d'écoulement ;
- un boîtier (H) séparé du tube d'écoulement, formé par un élément de boîtier polymère monolithique comportant une partie inférieure (B) et une partie latérale (W) pour former une cavité (C) avec une unique ouverture, ladite partie inférieure (B) comportant deux zones agencées pour la transmission de signaux ultrasonores, lesdites zones dotées de saillies (PA1, PA2) agencées pour entrer dans les deux ouvertures traversantes (P1, P2) dans la paroi du tube d'écoulement (F), et ledit boîtier (H) étant agencé pour être monté sur le tube d'écoulement (F) afin que les saillies soient agencées dans les ouvertures (P1, P2) dans le passage d'écoulement ;
- deux transducteurs à ultrasons (T1, T2), ou plus, agencés dans la cavité (C) alignés avec lesdites saillies (PA1, PA2) et agencés pour l'émission et la réception de signaux ultrasonores à travers les zones de la partie inférieure (B) du boîtier (H) ; et
- un élément de montage (M) faisant saillie à partir de la périphérie de boîtier (H), ledit élément de montage (M) étant agencé pour renforcer la partie inférieure du boîtier, l'élément de montage étant agencé en prise mutuelle avec la partie inférieure du boîtier, et où la partie inférieure (B) du boîtier (H) et l'élément de montage adsorbent collectivement les forces d'une pression de fluide dans le tube d'écoulement lorsque le boîtier est monté sur le tube d'écoulement,
**caractérisé par** :
- l'élément de montage (M) qui est plan et qui comporte des trous traversants (HS1) pour permettre une fixation au moyen de vis sur le tube d'écoulement (F).

2. Débitmètre à ultrasons selon la revendication 1, ledit élément de montage (M) possédant un module d'élasticité qui est supérieur au module d'élasticité de l'élément de boîtier monolithique polymère.

3. Débitmètre à ultrasons selon l'une quelconque des revendications précédentes, ledit élément de montage (M) étant un élément séparé, coulé dans la partie inférieure (B) de l'élément de boîtier monolithique.

4. Débitmètre à ultrasons selon l'une quelconque des revendications précédentes, ledit élément de montage (M) étant composé d'un métal ou d'un matériau composite.

5. Débitmètre à ultrasons selon l'une quelconque des revendications précédentes, ledit élément de montage étant constitué d'un seul élément monolithique (M).

6. Débitmètre à ultrasons selon la revendication 5, ledit fond de boîtier (B) possédant une pluralité de saillies circulaires réparties dans l'espace (PT1) destinées à se mettre en prise avec des ouvertures correspondantes (H1) de l'élément de montage (M).

7. Débitmètre à ultrasons selon l'une quelconque des revendications 1 à 4, ledit élément de montage comprenant deux éléments monolithiques (M1, M2), ou plus.

8. Débitmètre à ultrasons selon l'une quelconque des revendications précédentes, ladite ou lesdites zones de la partie inférieure (B) agencées pour la transmission de signaux ultrasonores comportant au moins une saillie (PA1, PA2) agencée pour entrer dans la au moins une ouverture traversante (P1, P2) dans la paroi du tube d'écoulement (F).

9. Débitmètre à ultrasons selon l'une quelconque des revendications précédentes, ladite partie inférieure (B) comprenant une ou plusieurs pistes (TR1, TR2) agencées pour se mettre en prise avec l'élément de montage (M1, M2).

10. Débitmètre à ultrasons selon l'une quelconque des revendications précédentes, ledit élément de montage (M) étant fixé à la partie inférieure de l'élément de boîtier monolithique au moyen d'au moins un parmi : des vis (S1, S2), de la colle, des rivets et une ou plusieurs soudures par ultrasons.

11. Débitmètre à ultrasons selon l'une quelconque des revendications 1, 2 ou 8, ledit élément de montage faisant partie intégrante du fond du boîtier, coulé de manière monolithique avec le boîtier.

12. Débitmètre à ultrasons selon la revendication 11, ladite partie inférieure étant renforcée en possédant une épaisseur de paroi plus épaisse de l'élément de montage que celle de la partie latérale.

13. Débitmètre à ultrasons selon l'une quelconque des revendications précédentes, ledit élément de boîtier monolithique étant façonné de façon à laisser de l'espace dans la cavité (C) pour les deux transducteurs à ultrasons (T1, T2), ou plus, et un circuit de mesure associé (MC).

14. Procédé de fabrication d'un débitmètre à ultrasons, ledit procédé comprenant :
- la fourniture d'un élément de boîtier monolithique polymère (H) comportant une partie inférieure et une partie latérale pour former une cavité avec une ouverture unique, et ladite partie inférieure comportant deux zones agencées pour la transmission de signaux ultrasonores,
- la fourniture d'un élément de montage (M) formé par un matériau possédant un module d'élasticité qui est supérieur au module d'élasticité de l'élément de boîtier monolithique polymère,
- l'attachement de l'élément de montage (M) à la partie inférieure de l'élément de boîtier pour former un boîtier de sous-ensemble afin que la partie inférieure de l'élément de boîtier et l'élément de montage soient agencés pour absorber collectivement les forces d'une pression de fluide,
- la fixation du logement de sous-ensemble à un tube d'écoulement avec un passage d'écoulement traversant pour le passage d'un fluide entre une entrée et une sortie, et deux-ouvertures traversantes agencées dans une paroi du tube d'écoulement, chacune pour une ouverture dans le passage d'écoulement,
- où l'élément de montage (M) est plan et fait saillie à partir de la périphérie de boîtier (H) et présente des trous traversants (HS1) pour une fixation au moyen de vis (S1, S2) au tube d'écoulement (F).

15. Procédé selon la revendication 14, comprenant le montage de transducteurs à ultrasons et d'un circuit de mesure dans la cavité de l'élément de maison avant de sceller l'ouverture unique dans le boîtier avec des moyens d'étanchéité.
